# EUROPÄISCHE PATENTSCHRIFT

(11) **EP 0 898 429 B1**
(45) Veröffentlichungstag und Bekanntmachung des Hinweises auf die Patenterteilung: **28.03.2007**
(21) Anmeldenummer: 98113234.3
(22) Anmeldetag: 16.07.1998
(51) Int. Cl.: H04N 17/00, H04H 1/00

(54) **Messverfahren zur Bewertung digitaler Übertragungssysteme sowie Vorrichtung dazu**
Measuring method and device for evaluating digital transmission systems
Procédé et dispositif de mesure pour l'évaluation de systèmes de transmission numérique

(30) Priorität: 16.08.1997 DE 19735472
(43) Veröffentlichungstag der Anmeldung: 24.02.1999
(73) Patentinhaber: Deutsche Telekom AG, 53113 Bonn (DE)
(72) Erfinder: Feiten, Bernhard Dr.-Ing., 13437 Berlin (DE)

(56) Entgegenhaltungen:
- EP-A- 0 535 435
- DE-A- 4 333 953
- GB-A- 2 116 403
- US-A- 5 446 492
- NOLAN M. ET AL: "A NEW COMPUTER-BASED, OBJECTIVE MEASUREMENT SYSTEM FOR COMPRESSED AUDIO USING PERCEPTUAL ANALYSIS ON SHORT INTERVAL TEST SIGNALS" SMPTE JOURNAL., Bd. 106, Nr. 2, 1. Februar 1997 (1997-02-01), Seiten 103-107, XP000678954 SMPTE INC. SCARSDALE, N.Y., US ISSN: 0036-1682
- MILNE A.: "NEW TEST METHODS FOR DIGITAL AUDIO DATA COMPRESSION ALGORITHMS" PROCEEDINGS OF THE INTERNATIONAL TEST AND MEASUREMENT CONFERENCE,US,, 29. Mai 1992 (1992-05-29), Seiten 210-215, XP000300178 NEW YORK, AES , CONF. 11,
- THOMPSON B.: "BASIC DIGITAL AUDIO TEST TECHNIQUES" SMPTE JOURNAL., Bd. 104, Nr. 10, 1. Oktober 1995 (1995-10-01), Seiten 666-667, XP002150641 SMPTE INC. SCARSDALE, N.Y., US ISSN: 0036-1682
- CABOT R.: "MEASURING AES-EBU DIGITAL AUDIO INTERFACES" JOURNAL OF THE AUDIO ENGINEERING SOCIETY., Bd. 38, Nr. 6, 1. Juni 1990 (1990-06-01), Seiten 459-468, XP000141399 AUDIO ENGINEERING SOCIETY. NEW YORK., US ISSN: 0004-7554

## Beschreibung

Die Erfindung betrifft ein Meßverfahren zur Bewertung digitaler Übertragungssysteme gemäß dem Oberbegriff von Anspruch 1 sowie eine Vorrichtung dazu.

Durch moderne perzeptions- bzw. wahrnehmungsbasierte Datenkompressionsverfahrens für Audio- und Videosignale werden für die meßtechnische Beurteilung der digitalen Übertragungssysteme neue Meßverfahren notwendig, welche zur Auswertung Kenntnis des Signals vor und nach der Übertragung erfordern. Bei perzeptionsbasierten Datenkompressionsverfahren werden zur Verringerung der bei Audio- und insbesondere Videosignalen erheblichen Datenmenge die Eigenschaften der menschlichen Wahrnehmung ausgenutzt. Im Originalsignal enthaltene Informationen, wie z.B. sehr hohe Geräuschfrequenzen oder schnelle Bildbewegungen, die der Mensch aufgrund der Eigenschaften der Sinneswahrnehmung nicht wahrzunehmen imstande ist, werden in Datenübertragungssystemen bereits auf der Senderseite durch geeignete Masken und Filter aus dem Originalsignal entfernt. Dies verringert die zum Empfänger zu übertragende Datenmenge erheblich und macht somit das gesamte Datenübertragungssystem leistungsfähiger, indem z.B. mehr Videobilder pro Sekunde übertragen werden können.

Da Datenübertragungssysteme mit derartigen Datenkompressionsverfahren das Frequenzbild des zu übertragenden Originalsignals entscheidend beeinflussen und verzerren, gibt der Test des Systems mit einfachen Meßsignalen, wie z.B. einem einfachen Sinus oder einem stationären Signal, nur wenig Aufschluß darüber, ob im Hinblick auf die menschliche Wahrnehmung eine größtmögliche Übereinstimmung zwischen dem Originalsignal und dem Ausgangssignal des Datenübertragungssystems auf der Empfängerseite gegeben ist. Dieser Qualitätstest kann sinnvollerweise nur mit Testsignalen durchgeführt werden, welche dem realen Programmaterial so ähnlich wie möglich sind und auch dessen Vielfalt aufweisen. Ein digitales Übertragungssystem für Rundfunkprogramme sollte daher z.B. mit Sprachsignalen und Ausschnitten aus Musiksignalen verschiedenster Stilrichtung und verschiedenen Videosignalen getestet werden.

Im Gegensatz zur Verwendung einfacher Signale als Testsignal bringt die Verwendung derartiger Ausschnitte aus realem Programmaterial den Nachteil mit sich, daß die Referenzsignale, d.h. das Testsignal vor senderseitiger Kompression und Einspeisung in die Übertragungsstrecke, auf der Seite des Empfängers explizit zur Verfügung gestellt werden müssen, da sonst ein Vergleich des Testsignals mit dem Referenzsignal zur Feststellung der Qualität der Übertragungsstrecke nicht möglich ist. Bei einfachen Testsignalen stellt sich dieses Problem nicht, da z.B. ein Sinus durch die Angabe der Frequenz und die Amplitude festgelegt ist, dies also wenig Speicherplatz erfordert. Der hingegen bei natürlichen Testsignalen erforderliche Speicherplatz in den Meß- und Auswertegeräten ist erheblich. Weiterhin lassen sich neue Meßsignale nur schwer in das Meßsystem integrieren.

Ein weiterer Nachteil bei der Verwendung von vordefinierten Ausschnitten aus realem Programmaterial ist, daß eine Messung der Übertragungsqualität während der gewöhnlichen Sendung kaum möglich ist, da vordefinierte Testsignale in der Regel inhaltlich nicht in die Sendung passen.

NOLAN M. ET AL: "A NEW COMPUTER-BASED, OBJECTIVE MEASUREMENT SYSTEM FOR COMPRESSED AUDIO USING PERCEPTUAL ANALYSIS ON SHORT INTERVAL TEST SIGNALS" SMPTE JOURNAL., Bd. 106, Nr. 2, 1. Februar 1997 (1997-02-01), Seiten 103-107, SMPTE INC. SCARSDALE, N.Y., US ISSN: 0036-1682 offenbart die Erzeugung von Testmustern und deren Analyse mittels Vergleich von geladenen Textfiles. Die Preambel (Bits 0-3) überträgt den Signaltyp. EP-A-0 535 435 (MOTOROLA INC.) betrifft ein analoges Verfahren.

GB-A-2 116 403 (BBC) betrifft das Parity Bit (Bit31)bzw, den CRC zur Fehlererkennung.

DE 43 33 953 A (SIEMENS AG) betrifft Messung der Häufigkeit des Empfangs eines Musters mit Rückmeldung an den Sender.

MILNE A.: "NEW TEST METHODS FOR DIGITAL AUDIO DATA COMPRESSION ALGORITHMS" PROCEEDINGS OF THE INTERNATIONAL TEST AND MEASUREMENT CONFERENCE,US,, 29. Mai 1992 (1992-05-29), Seiten 210-215, NEW YORK, AES, CONF. 11 betrifft den störenden Einfluss von Nachbarkanälen (Crosstalk), Echos (Ghost) auf Testsignale.

THOMPSON B.: "BASIC DIGITAL AUDIO TEST TECHNIQUES" SMPTE JOURNAL., Bd. 104, Nr. 10, 1. Oktober 1995 (1995-10-01), Seiten 666-667, SMPTE INC. SCARSDALE, N.Y., US ISSN: 0036-1682 stellt das AES3/EBU Format vor, die Verwendung von Augendiagrammen und Jitter Analyse.

CABOT R.: "MEASURING AES-EBU DIGITAL AUDIO INTERFACES" JOURNAL OF THE AUDIO ENGINEERING SOCIETY., Bd. 38, Nr. 6, 1. Juni 1990 (1990-06-01), Seiten 459-468, AUDIO ENGINEERING SOCIETY. NEW YORK., US ISSN: 0004-7554 betrifft ebenfalls das AES3/EBU Format, die Verwendung von Augendiagrammen und Jitter Analyse. Fig. 9 offenbart einen Testaufbau. Gemessen werden Sync Bits (Bit 0-3) und die Parity bits (Bit 31). Die User bits (Bit 29) werden nicht näher spezifiziert.

US-A-5 446 492 (WOLF S. ET AL) offenbart ein analoges Verfahren.

Der Erfindung liegt die Aufgabe zugrunde, ein Meßverfahren sowie eine entsprechende Vorrichtung zur Bewertung digitaler Übertragungssysteme zur Verfügung zu stellen, wobei das Verfahren während des gewöhnlichen Sendebetriebs ohne dessen Störung durchführbar ist. Es sollen verschiedenartige, für die Beurteilung der Qualität der Übertragung relevante Testsignale verwendet werden und der zur Speicherung von Test- und Referenzsignalen nötige Speicherplatz verringert werden.

Die Lösung der Aufgabe besteht erfindungsgemäß bei einem Meßverfahren zur Bewertung digitaler Übertragungssysteme gemäß dem Oberbegriff von Anspruch 1, bei welchem sende- und empfangsseitig je ein Meßgerät - das Sende- bzw. Empfangsmeßgerät auf den Hauptkanal zuzugreifen und sendeseitig Sequenzen des Original- bzw. empfangsseitig des Ausgangssignals aufzuzeichnen imstande sind. Das Sendemeßgerät setzt die eigene Datenaufnahme sowie über Steuersignale die Datenaufnahme des Empfangsmeßgeräts derart in Gang und bricht diese wieder ab, daß Sende- und Empfangsmeßgerät einander entsprechende Sequenzen des Original- bzw. Ausgangssignals als Referenz- bzw. Testsignal aufzeichnen. Dabei werden die Steuersignale über den Hilfskanal übertragen. Weiterhin übermittelt das Sendemeßgerät nach Beendigung der Aufzeichnung das gespeicherte Referenzsignal über den Hilfskanal dem Empfangsmeßgerät, von welchem Test- und Referenzsignal einer gemeinsamen Auswertung zugeführt werden.

Weitere vorteilhafte Weiterbildungen der Erfindung sind in den Unteransprüchen gekennzeichnet.

Vorzugsweise wird das Meßverfahren mit einer Vorrichtung durchgeführt, welche ein Sendemeßgerät und ein Empfangsmeßgerät aufweist, wobei das Sendemeßgerät sendeseitig vor der Codierung und Übertragung der Signale zum Einsatz kommt und das Empfangsmeßgerät empfangsseitig entsprechend nach der Decodierung. Dabei sind Sendemeßgerät sendeseitig und Empfangsmeßgerät empfangsseitig Sequenzen des Original- bzw. des Ausgangssignals aus dem Hauptkanal aufzuzeichnen imstande sind, wobei diese Sequenzen jeweils in einem Ausschnittsspeicher gespeichert werden. Das Sendemeßgerät enthält eine Steuereinheit, welche die Aufzeichnung dieser Sequenzen sende- und emfangsseitig steuert. Zur Steuerung des Aufzeichnungsvorgangs des Empfangsmeßgeräts werden vom Sendemeßgerät Steuersignale über den Hilfskanal als Nebeninformation zum Empfangsmeßgerät übertragen, welches die Steuersignale mittels einer Steuereinheit zu erkennen imstande ist. Weiterhin ist das Sendemeßgerät imstande, die sendeseitig aufgezeichnete Sequenz über den Hilfskanal zum Empfangsmeßgerät zu übertragen. Zur Übertragung von Informationen, d.h. der Steuersignale sowie der aufgezeichneten Sequenz, ist eine Umwandlung dieser Informationen in das im Hilfskanal übertragbare Datenformat ("Userbits") notwendig, welches beim erfindungsgemäßen Sendemeßgerät mit einem Wandler bewerkstelligt wird. Nach der Übertragung der Nebeninformation werden die entsprechenden Signale in einer empfangsseitigen Steuereinheit decodiert, sowie die in der Nebeninformation enthaltenen, von der Steuereinheit des Sendemeßgeräts generierten Steuersignale erkannt. Gesteuert durch diese Steuersignale, veranlaßt das Empfangsmeßgerät die Aufzeichnung einer Sequenz aus dem Hauptkanal bzw. aus dem Hilfskanal in den dazugehörigen Ausschnittsspeicher für das Test- bzw. Referenzsignal.

Die Erfindung bietet die Möglichkeit, beliebige Ausschnitte des zu übertragenden Originalsignals als Testsignal zu wählen. Daher kann die Messung während der regulären Übertragung eines Audio- oder Videoprogramms erfolgen. Die Wahl der als Test- bzw. Referenzsignale verwendeten Sequenz des Originalsignals erfolgt gesteuert durch ein Sendemeßgerät, welches auf der Sendeseite der Übertragungsvorrichtung angeordnet ist. Das Sendemeßgerät ist beispielsweise imstande, charakteristische Sequenzen des Originalsignals automatisch zu identifizieren, welche dann den Beginn der Messung triggern. Weiterhin kann die Messung automatisch in regelmäßigen zeitlichen Abständen oder auf manuelle Eingabe eingeleitet werden.

Erfindungsgemäß kommt das Meßverfahren zum Einsatz bei digitalen Übertragungssystemen, welche die Originalsignale in einem Hauptkanal übertragen sowie einen Hilfskanal zur Übertragung von Nebeninformationen zur Verfügung stellen. Die über den Hauptkanal übermittelte Information wird z.B. nach dem oben erwähnten perzeptionsbasierten Verfahren komprimiert, während die Nebeninformation unkomprimiert über den Hilfskanal übertragen wird.

Das erfindungsgemäße Meßverfahren kann auf die bekannten Standards für digitale Übertragungsverfahren, wie z.B. AES/EBU oder DAB, Anwendung finden. In derartigen digitalen Übertragungsformaten werden freie benutzerdefinierbare Datenfelder mit einer niedrigen Übertragungsrate zum Empfänger übertragen. Beispielsweise sieht das AES/EBU-Format einen benutzerdefinierbaren Datenstrom von 1/32 der Gesamtübertragungskapazität vor.

Erfindungsgemäß steuert das Sendemeßgerät über diesen Hilfskanal die Datenaufnahme des Empfangsmeßgerätes und sychronisiert diese dadurch mit der eigenen Datenaufnahme. Bei Einleitung des Meßverfahrens erzeugt das Sendemeßgerät ein Steuersignal und übermittelt dieses dem Empfangsmeßgerät. Das Steuersignal ist beispielsweise ein charakteristischer Zahlencode, welcher vorbestimmt ist und vom Empfangsmeßgerät, insbesondere dessen Steuereinheit, erkannt wird.

Nach Abgabe dieses Start-Steuersignals beginnt das Sendemeßgerät mit der Datenaufnahme durch Abtasten des Originalsignals aus dem Hauptkanal. Die noch nicht komprimierten Daten werden als Referenzsignal aufgezeichnet und sendeseitig gespeichert. Ebenso beginnt das Empfangsmeßgerät nach Empfang des Start-Steuersignals über den Hilfskanal das Abtasten des über den Hauptkanal übertragenen Ausgangssignals und zeichnet diese Daten empfangsseitig als Testsignal auf.

Da das Start-Steuersignal aufgrund seiner einfachen Datenstruktur über den Hilfskanal ebenso schnell übertragen wird wie das Originalsignal über den Hauptkanal, zeichnen Sender und Empfangsmeßgerät stets einander entsprechenden Sequenzen des Original- bzw. Ausgangssignals auf.

Vorzugsweise gibt das Sendemeßgerät während der Aufzeichnung des Referenzsignals ein dauerhaftes Steuersignal, z.B. die Bitfolge 111 ..., ab, welches dem Empfangsmeßgerät anzeigt, daß die Datenaufnahme des Testsignals fortzusetzen ist. Nach Abbruch dieses Steuersignals, d.h. nach Abbruch der Datenaufnahme des Sendemeßgeräts, beendet auch das Empfangsmeßgerät das Aufzeichnen der Daten. Somit werden stets einander entsprechende Sequenzen des Original- bzw. Ausgangssignals mit gleicher Länge aufgezeichnet. Ermittelt zudem das Empfangsmeßgerät die Länge dieses Steuersignals z.B. die Anzahl der als Bitfolge gesendeten Einsen, so läßt sich diese Information leicht in eine Information über die Länge von Test- bzw. Referenzsignalen umrechnen und die spätere Auswertung vereinfachen. Zur Erkennung von Übertragungsfehlern sollte die Dauer des Ausschnittes ein zweites Mal als Zahl übertragen werden.

Vorteilhaft ist es auch, wenn das Sendemeßgerät bei Beendigung der Datenaufnahme ein Steuersignal, z.B. die Bitfolge 000, abgibt, welche die Aufzeichnung des Testsignals durch das Empfangsmeßgerät beendet. Vorzugsweise leitet dieses Stop-Steuersignal die Übermittlung des vom Sendemeßgerät gespeicherten Referenzsignals über den Hilfskanal zum Empfangsmeßgerät ein. Empfängt das Empfangsmeßgerät das Stop-Steuersignal, beendet es also das Abtasten des Hauptkanals zur Aufzeichnung des Testsignals und schaltet um auf Abtasten des Hilfskanals zur Aufzeichnung des Referenzsignals. Dieser Verfahrensschritt kann jedoch auch mit zwei Steuersignalen erreicht werden.

Beginn und Ende der Übertragung des Referenzsignals werden dem Empfangsmeßgerät durch das Sendemeßgerät über Steuersignale mitgeteilt. Vorzugsweise ist eines dieser Steuersignale mit dem Steuersignal zur Beendigung der Aufzeichnung des Testsignals identisch. Empfangsseitig wird daraufhin die Aufzeichnung des Referenzsignals aus dem Hilfskanal gestartet bzw. beendet. Auf das Steuersignal zur Beendigung der Aufzeichnung des Referenzsignals durch das Empfangsmeßgerät kann verzichtet werden, wenn das Empfangsmeßgerät die Länge des bereits gespeicherten Testsignals bzw. die Anzahl von dessen gespeicherten Werten ermittelt und eine dementsprechende Anzahl von Werten des vom Sendemeßgerät über den Hilfskanal übermittelten Referenzsignals aufzeichnet. Möglicherweise fehlangepaßte Längen von Referenz- und Testsignal durch fehlerhaft Sychronisation der Datenaufnahme werden somit vermieden und empfangsseitig stehen Referenz- und Testsignal gleicher Länge zur Verfügung und können ausgewertet werden.

Die vom Sendemeßgerät abgetasteten Originaldaten aus dem Hauptkanal werden beispielsweise in Bit-serieller Darstellung über den Hilfskanal zum Empfangsmeßgerät übertragen. Da die Datentransportkapazität des Hilfskanals gegenüber der des Hauptkanals verringert ist, nimmt die Übertragung des Referenzsignals über den Hilfskanal mehr Zeit in Anspruch als die Übertragung des Testsignals über den Hauptkanal. Die Anzahl der Datenpunkte bleibt jedoch gleich, so daß einander entsprechende Datenpunkte des Referenz bzw. Testsignals vom Empfangsmeßgerät einander zugeordnet werden können. Die für die Übertragung einer Signalfrequenz notwendige Zeit bestimmt also, mit welcher maximalen Wiederholungsrate das Verfahren durchgeführt werden kann. Nachdem empfangsseitig Test- und Referenzsignal vorliegen und für eine Auswertung zur Verfügung stehen, kann das Verfahren mit der Aufnahme eines neuen Ausschnitts aus dem Originalsignal bzw. Ausgangssignal als Referenz- und Testsignal erneut gestartet werden. Dies ermöglicht eine quasi kontinuierliche Kontrolle der Übertragungsqualität mit einer Vielzahl von verschiedenen Testsignalen.

Bei Anwendung des erfindungsgemäßen Verfahrens muß senderseitig nur der Speicherplatz für eine Signalfrequenz bestimmter Länge zur Verfügung stehen sowie empfangsseitig der Speicherplatz für ein Sequenzpaar, nämlich Test- und Referenzsignal. Darüber hinaus wird empfangsseitig weiterer Speicherplatz benötigt, falls eine gleichzeitige Auswertung und Aufnahme eines neuen Testsignals vorgesehen werden soll. Test- und Referenzsignal können dazu auch unter Freigabe der entsprechenden Ausschnittsspeicher an eine Auswerteeinheit weitergeleitet werden.

Ein Beispiel der Erfindung ist in der Zeichnung dargestellt und im folgenden beschrieben. Dabei zeigen:
- Figur 1: ein Blockschaltbild zur Anwendung des erfindungsgemäßen Verfahrens
- Figur 2: ein Blockschaltbild des Sendemeßgeräts zur Darstellung der sendeseitigen Meßsignalgenerierung
- Figur 3: ein Blockschaltbild des Empfangsmeßgeräts zur Darstellung der empfangsseitigen Meßsignalgenerierung

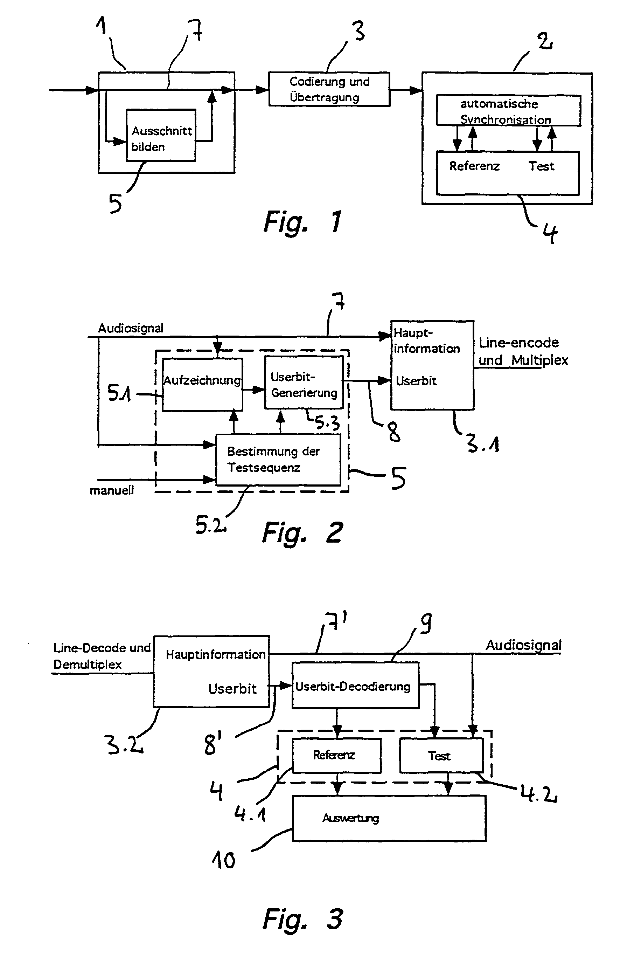

Figur 1 zeigt ein Blockschaltbild zur Anwendung des erfindungsgemäßen Verfahrens zur Bewertung digitaler Übertragungsstrecken. Digitale Audio- und/oder Videosignale aus einem Hauptkanal 7 werden mit einem Übertragungssystem 3 sendeseitig codiert und in eine Übertragungsstrecke eingespeist. Vor der Codierung findet je anch Übertragungssystem gegebenenfalls eine perzeptionsbasierte Kompression der Originalsignale statt. Auf der Empfängerseite werden die Ausgangssignale wieder decodiert und stehen nunmehr dem Benutzer zur Verfügung. Die Qualität der Kompression und Übertragung dieser Hauptinformation wird mit dem erfindungsgemäßen Verfahren durch den Vergleich eines mit dem Übertragungssystem 3 während des gewönlichen Sendebetriebs über den Hauptkanal 7 übertragenen Testsignals mit einem Referenzsignal überprüft, wobei Test- und Referenzsignal Ausschnitte aus realem Programmaterial sind.

Das Übertragungssystem 3 bietet die Möglichkeit zur Übertragung von freier, benutzerdefinierbarer Nebeninformation.

Die Meßsignale werden vom Sendemeßgerät 1 mittels einer Zentraleinheit 5 ausgewählt. Diese Zentraleinheit 5 hat Zugriff auf den Hauptkanal 7 und kann Daten aus diesem aufzeichnen. Sie markiert dabei automatisch oder auf manuelle Eingabe einen bestimmter Ausschnitt aus dem Originalsignal, der z.B. für die Übertragung kritische Merkmale aufweisen kann, und veranlaßt Sende- und Empfangsmeßgerät 1 bzw. 2, diese Sequenz synchron aufzuzeichnen. Die dazu notwendigen Steuersignale werden als Nebeninformation vom Sende- zum Empfangsmeßgerät übertragen. Die Aufzeichnung der Sequenzen beeinflußt den normalen Sendebetrieb nicht.

Nach Abschluß der Aufzeichnung der Sequenzen liegt sendeseitig das Referenz-, empfangsseitig das Testsignal vor. Das Testsignal ist im Empfangsmeßgerät 2 in einem Auschnittsspeicher 4 gespeichert. Das Referenzsignal wird nun mittels des Übertragungssystems 3 über den Hilfskanal übertragen und vom Empfangsmeßgerät in den Speicher 4 aufgezeichnet, wobei die Übertragung als Nebeninformation den normalen Sendebetrieb nicht stört.

Das Emfangsmeßgerät synchronisiert die als Referenz- und Testsignal in den Speicher aufgezeichneten Sequenzen und führt gegebenenfalls eine Fehlerkontrolle durch. Die einander zugeordneten Sequenzen gleicher Länge werden nun zur Bewertung der Übertragungsqualität gemeinsam ausgewertet, wobei während der Auswertung bereits die Aufzeichnung eines neuen Sequenzpaars stattfinden kann.

Die Figuren 2 und 3 zeigen ein Blockschaltbild des Sende- bzw. Empfangsmeßgeräts zur Darstellung der sende- bzw. empfangsseitigen Meßsignalgenerierung und der Steuerung des empfangsseitigen Meßablaufs.

Das erfindungsgemäße Verfahren wird auf ein Übertragungssystem von Audiosignalen nach dem AES-3 Übertragungsstandard angewendet. Das AES-3 Format sieht einen benutzerdefinierbaren Datenstrom ("Userbits") von 1/32 der Übertragungskapazität vor. Diese Nebeninformation/Userbits wird dem AES-3 Encoder 3.1, der sich am Eingang des Übertragungssystems 3 aus Figur 1 befindet, über einen Hilfskanal 8 zugeführt. Die Hauptinformation, d.h. die originalen bzw. bereits komprimierten Audiosignale erreichen den AES-3 Encoder 3.1 über den Hauptkanal 7. In bekannter Weise codiert der AES-3 Encoder 3.1 die Informationen in das Datenformat, in welchem sie übertragen werden, und faßt die Userbits und Hauptinformation aus Hilfs- bzw. Hauptkanal 8 bzw. 7 durch Multiplexing zusammen.

Der umgekehrte Vorgang findet auf der Empfangsseite statt (Figur 3). Die übertragenen Daten werden in bekannter Weise mit einem AES-3 Decoder 3.2 decodiert und durch Demultiplexing als Hauptinformation, d.h. das Ausgangs-Audiosignal, und Userbits auf Haupt- und Hilfskanal 7' bzw. 8' verteilt.

Der Meßablauf wird durch das Sendemeßgerät gesteuert. Die Zentraleinheit 5 des Sendemeßgeräts weist dazu eine Steuereinheit 5.2 auf, welche das Audiosignal aus dem Hauptkanal abtastet. Die Steuereinheit 5.2 prüft dabei automatisch, ob ein für die Beurteilung der Übertragungsqualität kritischer Signalabschnitt vorliegt. Das Vorliegen einer derartigen Sequenz kann die Steuereinheit zum automatischen Start des Meßverfahrens veranlassen. Weiterhin kann die Steuereinheit 5.2. das Meßverfahren in regelmäßigen zeitlichen Abständen oder auf manuelle Eingabe starten.

Der Beginn eines Testausschnitts wird durch eine exakt spezifizierte und geeignete Zahlenfolge, wie z.B. die Folge 1010..., gekennzeichnet. Dieses Steuersignal steuert die Datenaufnahme des Sendemeßgeräts, wobei eine Sequenz des unkomprimierten Audiosignal aus dem Hauptkanal in einem Ausschnittsspeicher 5.1. aufgezeichnet wird. Weiterhin steuert dieses Steuersignal auch die Datenaufnahme des Empfangsmeßgeräts. Dazu muß es in einem Wandler 5.3 zunächst in das Userbit-Format gebracht und über den Hilfskanal 8 dem Encoder 3.1 zugeführt werden. Es wird als Nebeninformation zum Empfangsmeßgerät übertragen und von diesem mit der empfangsseitigen Steuereinheit 9 ausgewertet.

Diese empfangsseitige Steuereinheit 9 decodiert die Userbits und erkennt aus diesem Datenstrom die Steuersignale des Sendemeßgeräts. Sie veranlaßt die den Steuersignalen entsprechenden Verfahrensschritte.

Die Dauer des Testauschnitts wird durch ein weiteres Steuersignal, z.B. die für die Dauer der Aufzeichnung ununterbrochene Übertragung von Einsen, markiert. Während die Steuereinheit 5.2 dieses Signal abgibt, zeichnen Sendemeßgerät und Empfangsmeßgerät jeweils die entsprechende Sequenz des Audiosignals aus dem Hauptkanal 7 bzw. 7' auf. Diese Sequenz wird im Sendemeßgerät im Speicher 5.1 als Referenzsignal und im Epfangsmeßgerät im Speicher 4.2 als Testsignal gespeichert. Durch ein derartiges Dauer-Steuersignal ist sichergestellt, daß stets einander entsprechende Sequenzen gleicher Länge aufgezeichnet werde.

Das Ende des Testausschnitts ergibt sich durch ein weiteres Steuersignal, z.B. dadurch, daß das Userbit von der Steuereinheit 5.2 auf Null gesetzt wird. Dadurch wird sendeseitig die Aufzeichnung der Referenzsequenz bzw. empfangssseitig der Testsequenz beendet.

Zur Fehlerkontrolle sendet das Sendemeßgerät nach Beendigung der Aufzeichnung die Dauer des Referenzsignals als Zahl an das Empfangsmeßgerät. Stimmt diese Information nicht mit der vom Empfangsmeßgerät ermittelten Länge des Testsignals überein, liegt ein Übertragungsfehler vor, und die Messung wird gegebenenfalls verworfen.

Im nächsten Schritt werden die im Speicher 5.1 des Sendemeßgeräts gespeicherten Abtastwerte der gewählten Sequenz als Nebeninformation/Userbits übertragen. Die Übertragung wird mit einem weiteren Steuersignal der Steuereinheit 5.2, z.B. dem Userbit "1", eingeleitet. Dieses Steuersignal veranlaßt das Empfangsmeßgerät zum Aufzeichnen der in bit-serieller Darstellung übertragenen Abtastwerte und Abspeichern im Speicher 4.1, welcher der Speicher für das Referenzsignal ist. Das Testsignal ist bereits im Speicher 4.2 des Empfangsmeßgeräts gespeichert.

Referenz- und Testsignal liegen nun empfangsseitig vor und werden in einer Auswerteeinheit 10 gemeinsam in bekannter Weise ausgewertet. Während der Auswertung kann schon die Übertragung des nächsten Meßabschnitts erfolgen.

### Liste der Bezugszeichen:

- 1: Sendemeßgerät
- 2: Empfangsmeßgerät
- 3: Übertragungssystem
3.1 Encoder
3.2 Decoder
- 4: Ausschnittsspeicher (empfangsseitig)
4.1 für das Referenzsignal
4.2 für das Testsignal
- 5: Zentraleinheit (sendeseitig)
5.1 Ausschnittsspeicher
5.2 Steuereinheit
5.3 Wandler
- 7, 7': Hauptkanal
- 8, 8': Hilfskanal
- 9: Steuereinheit (empfangsseitig)
- 10: Auswerteeinheit

## Patentansprüche

1. Meßverfahren zur Bewertung digitaler Übertragungssysteme (3), welche Originalsignale, wie Audio- oder Videosignale, in einem Hauptkanal (7, 7') übertragen und einen Hilfskanal (8, 8') zur Übertragung von Nebeninformation zur Verfügung stellen, wobei unter Verwendung eines Sende- bzw. Empfangsmeßgeräts (1 bzw. 2) ein Testsignal über den Hauptkanal übertragen und die Qualität der Übertragung durch Vergleich mit einem empfangsseitig bereitgestellten Referenzsignal ermittelt wird,
**dadurch gekennzeichnet,**
**daß** sende- und empfangsseitig ein Sende- bzw. Empfangsmeßgerät (1 bzw. 2) auf den Hauptkanal (7, 7') zuzugreifen und sendeseitig Sequenzen des Original- bzw. empfangsseitig des Ausgangssignals aufzuzeichnen imstande sind,
**daß** das Sendemeßgerät (1) die eigene Datenaufnahme sowie durch Steuersignale die Datenaufnahme des Empfangsmeßgeräts (2) derart in Gang setzt und abbricht, daß Sende- und Empfangsmeßgerät einander entsprechende Sequenzen des Original- bzw. Ausgangssignals als Referenz- bzw. Testsignal aufzeichnen, wobei die Steuersignale über den Hilfskanal (8, 8') übertragen werden,
und **daß** das Sendemeßgerät (1) nach Beendigung der Aufzeichnung das gespeicherte Referenzsignal über den Hilfskanal (8, 8') dem Empfangsmeßgerät (2) übermittelt, von welchem Test- und Referenzsignal einer gemeinsamen Auswertung zugeführt werden.

2. Meßverfahren nach Anspruch 1, **dadurch gekennzeichnet,**
**daß** das vom Sendemeßgerät an das Empfangsmeßgerät übermittelte Steuersignal, welches das Empfangsmeßgerät zum Start der Datenaufnahme veranlaßt, ein vorbestimmter Zahlencode ist, wobei das Sendemeßgerät die Datenaufnahme nach vollständigem Senden und das Empfangsmeßgerät nach vollständigem Empfang des Zahlencodes beginnt.

3. Meßverfahren nach Anspruch 1 oder 2, **dadurch gekennzeichnet,**
**daß** das Sendemeßgerät während der Aufzeichnung des Referenzsignals ein dauerhaftes Steuersignal, z.B. die Bitfolge 111..., abgibt, welches die Datenaufnahme des Empfangsmeßgeräts in Gang hält, die nach Abbruch des Steuersignals beendet wird, so daß stets einander entsprechende Sequenzen gleicher Länge aufgezeichnet werden.

4. Meßverfahren nach einem der Ansprüche 1 bis 3, **dadurch gekennzeichnet,**
**daß** das Sendemeßgerät bei Beendigung der Datenaufnahme ein Steuersignal, z.B. die Bitfolge 000, abgibt, welche die Aufzeichnung des Testsignals durch das Empfangsmeßgerät beendet.

5. Meßverfahren nach Anspruch 4, **dadurch gekennzeichnet,**
**daß** das Steuersignal zur Beendigung der Datenaufnahme die Übermittlung bzw. Aufzeichnung des Referenzsignals durch das Sende- bzw. Empfangsmeßgerät einleitet.

6. Meßverfahren nach einem der Ansprüche 1 bis 5, **dadurch gekennzeichnet,**
**daß** das Empfangsmeßgerät die Länge des Testsignals bzw. die Anzahl von dessen gespeicherten Werten ermittelt und eine dementsprechende Anzahl von Werten des vom Sendemeßgerät übermittelten Referenzsignals aufzeichnet, so daß empfangsseitig Referenz- und Testsignal gleicher Länge vorliegen und ausgewertet werden können.

7. Meßverfahren nach einem der Ansprüche 1 bis 5, **dadurch gekennzeichnet,**
**daß** Beginn und Ende der Übertragung des Referenzsignals dem Empfangsmeßgerät durch das Sendemeßgerät über Steuersignale mitgeteilt werden, welches dementsprechend die emfangsseitige Aufzeichnung des Referenzsignals startet bzw. beendet.

8. Meßverfahren nach einem der Ansprüche 1 bis 7, **dadurch gekennzeichnet,**
**daß** es durch das Sendemeßgerät automatisch in regelmäßigen zeitlichen Abständen oder beim Vorliegen charakteristischer, vom Sendemeßgerät erkannter Originalsignale, z.B. für das digitale Übertragungssystem als kritisch bekannter Signalsequenzen, oder auf manuelle Eingabe eingeleitet wird.

9. Vorrichtung mit einem Sende- und einem Empfangsmeßgerät (1 bzw. 2) zur Durchführung eines Meßverfahrens zur Bewertung digitaler Übertragungssysteme (3) gemäß einem der Ansprüche 1 bis 8, **dadurch gekennzeichnet,**
**daß** das Sendemeßgerät (1) sendeseitig Sequenzen des Originalsignals und das Empfangsmeßgerät (2) empfangsseitig Sequenzen des Ausgangssignals aus dem Hauptkanal (7 bzw. 7') in einen Ausschnittsspeicher (5.1 bzw. 4.2) aufzuzeichnen imstande sind, wobei das Sendemeßgerät eine Zentraleinheit (5) aufweist, welche die Aufzeichnung dieser Sequenzen in einen Auschnittsspeicher (5.1) mit einer Steuereinheit (5.2) steuert sowie die entsprechenden Steuersignale und die sendeseitig aufgezeichnete Sequenz mit einem Wandler (5.3) in über den Hilfskanal (8, 8') übertragbare Nebeninformation umwandelt, und wobei das Empfangsmeßgerät (2) eine Steuereinheit (9) aufweist, welche als Nebeninformation übertragene Steuersignale zu erkennen imstande ist und dementsprechend die Aufzeichnung einer Sequenz aus dem Hauptkanal (7') bzw. aus dem Hilfskanal (8') in den Ausschnittsspeicher (4.2) bzw. einen weiteren Ausschnittsspeicher (4.1) veranlaßt.

## Claims

1. Measurement method for evaluating digital transmission systems (3), the transmission system transmitting original signals, such as audio or video signals, over a main channel (7, 7') and making available an auxiliary channel (8, 8') for the transmission of auxiliary information, wherein a test signal is transmitted over the main channel using a transmitting or receiving measurement device (1 or 2), and the quality of the transmission is ascertained by comparison with a reference signal provided on the receiving side, **characterized in that**
transmitting or receiving measurement devices (1 or 2) on the transmitting and receiving sides are capable of accessing the main channel (7, 7'), and capable of recording sequences of the original signal on the transmitting side, and capable of recording the output signal on the receiving side,
**in that** the transmitting measurement device (1) starts and stops its own data recording and, via control signals, data recording by the receiving measurement device (2) such that the transmitting and receiving measurement devices record sequences of the original signal or output signal as reference signal or test signal, which correspond to one another, wherein the control signals are transmitted over the auxiliary channel (8, 8'),
and **in that** the transmitting measurement device (1), following termination of recording, transmits the stored reference signal over the auxiliary channel (8, 8') to the receiving measurement device (2) whence the test and reference signals are delivered for common evaluation.

2. Measurement method according to claim 1, **characterized in that**
the control signal transmitted by the transmitting measurement device to the receiving measurement device which causes the receiving measurement device to start recording data is a predetermined numeric code, wherein the transmitting measurement device starts recording after completing transmission of the numeric code and the receiving measurement device starts recording after completing reception of the numeric code.

3. Measurement method according to claim 1 or 2, **characterized in that**
while recording the reference signal, the transmitting measurement device emits a continuous control signal, for example the bit sequence 111..., which signal maintains the data recording of the receiving measurement device, said recording being stopped upon termination of the control signal, so that sequences of equal length that correspond to one another are always recorded.

4. Measurement method according to any one of claims 1 through 3, **characterized in that**
upon termination of data recording, the transmitting measurement device emits a control signal, for example the bit sequence 000, which signal terminates recording of the test signal by the receiving measurement device.

5. Measurement method according to claim 4, **characterized in that**
the control signal for terminating the data recording initiates the transmission or recording of the reference signal by the transmitting or receiving measurement device.

6. Measurement method according to any one of claims 1 through 5, **characterized in that**
the receiving measurement device identifies the length of the test signal or the number of its stored values and records a corresponding number of values of the reference signal transmitted by the transmitting measurement device, so that reference and test signals of equal length are present on the receiving side and can be evaluated.

7. Measurement method according to any one of claims 1 through 5, **characterized in that**
the start and end of the transmission of the reference signal are communicated to the receiving measurement device by the transmitting measurement device via control signals, and the device starts or ends the receive-side recording of the reference signal accordingly.

8. Measurement method according to any one of claims 1 through 7, **characterized in that**
it is initiated automatically by the transmitting measurement device at regular time intervals or when characteristic original signals, e.g. signal sequences known to be critical for the digital transmission system, are detected by the transmitting measurement device, or upon manual input.

9. Device with a transmitting and a receiving measurement device (1 or 2) for carrying out a measurement method for evaluating digital transmission systems (3) according to any one of claims 1 through 8, **characterized in that**
the transmitting measurement device (1) is capable of recording sequences of the original signal on the transmitting side, and the receiving measurement device (2) is capable of recording sequences of the output signal from the primary channel (7 or 7') on the receiving side, said recording taking place into a window memory (5.1 or 4.2), wherein the transmitting measurement device has a central unit (5) that controls the recording of these sequences in a window memory (5.1) with a control unit (5.2) and, using a converter (5.3), converts the corresponding control signals and the sequence recorded on the transmitting side into auxiliary information that can be transmitted over the auxiliary channel (8, 8'), and wherein the receiving measurement device (2) has a control unit (9) that is able to detect the control signals transmitted as auxiliary information and accordingly to trigger the recording of a sequence from the primary channel (7') or from the auxiliary channel (8') into the window memory (4.2) or into an additional window memory (4.1).

## Revendications

1. Procédé de mesure pour l'évaluation de systèmes de transmission numériques (3) transmettant des signaux originaux, tels que des signaux audio ou vidéo, dans un canal principal (7, 7') et fournissant un canal auxiliaire (8, 8') pour la transmission d'informations secondaires, un signal de test étant transmis par l'intermédiaire du canal principal en utilisant un appareil de mesure d'émission ou de réception (1 ou 2) et la qualité de la transmission étant déterminée par comparaison avec un signal de référence fourni côté réception,
**caractérisé**
**en ce qu'**un appareil de mesure d'émission ou de réception (1 ou 2) est capable d'accéder au canal principal (7, 7') côté émission et réception et d'enregistrer des séquences du signal original côté émission et des séquences du signal de sortie côté réception,
l'appareil de mesure d'émission (1) active et désactive sa propre acquisition de données et, par l'intermédiaire de signaux de commande, l'acquisition de données de l'appareil de mesure de réception (2) de manière telle que l'appareil de mesure d'émission et
l'appareil de mesure de réception enregistrent des séquences correspondant l'une à l'autre respectivement du signal original ou du signal de sortie comme signal de référence ou de test, les signaux de commande étant transmis par l'intermédiaire du canal auxiliaire (8, 8'),
et, une fois l'enregistrement terminé, l'appareil de mesure d'émission (1) transmet le signal de référence enregistré par l'intermédiaire du canal auxiliaire (8, 8') à l'appareil de mesure de réception (2) qui applique le signal de test et le signal de référence à un système d'évaluation commun.

2. Procédé de mesure selon la revendication 1, **caractérisé en ce que** le signal de commande transmis par l'appareil de mesure d'émission à l'appareil de mesure de réception et amenant l'appareil de mesure de réception à démarrer l'acquisition de données, est un code à chiffres prédéfini, l'appareil de mesure d'émission commençant l'acquisition de données après l'émission intégrale du code à chiffres et l'appareil de mesure de réception commençant l'acquisition de données après la réception intégrale du code à chiffres.

3. Procédé de mesure selon la revendication 1 ou 2, **caractérisé en ce que** pendant l'enregistrement du signal de référence, l'appareil de mesure d'émission émet un signal de commande continu, telle la séquence binaire 111 ..., permettant de maintenir l'acquisition de données de l'appareil de mesure de réception qui prend fin après l'interruption du signal, de manière que des séquences enregistrées correspondant l'une à l'autre soient toujours de longueur identique.

4. Procédé de mesure selon l'une des revendications 1 à 3, **caractérisé**
**en ce que**, une fois l'acquisition de données terminée, l'appareil de mesure d'émission émet un signal de commande, telle la séquence binaire 000, mettant fin à l'enregistrement du signal de test par l'appareil de mesure de réception.

5. Procédé de mesure selon la revendication 4, **caractérisé**
**en ce que**, pour mettre fin à l'acquisition de données, le signal de commande déclenche la transmission ou l'enregistrement du signal de référence par l'appareil de mesure d'émission ou de réception.

6. Procédé de mesure selon l'une des revendications 1 à 5, **caractérisé**
**en ce que** l'appareil de mesure de réception détermine la longueur du signal de test ou le nombre de valeurs enregistrées de celui-ci et enregistre un nombre correspondant de valeurs du signal de référence transmis par l'appareil de mesure d'émission de manière à obtenir et à pouvoir évaluer, côté réception, un signal de référence et un signal de test de même longueur.

7. Procédé de mesure selon l'une des revendications 1 à 5, **caractérisé**
**en ce que** le début et la fin de la transmission du signal de référence sont communiqués par l'appareil de mesure d'émission à l'appareil de mesure de réception au moyen de signaux de commande, l'appareil de mesure de réception démarrant ou arrêtant, en fonction desdits signaux, l'enregistrement du signal de référence côté réception.

8. Procédé de mesure selon l'une des revendications 1 à 7, **caractérisé**
**en ce qu'**il est déclenché automatiquement par l'appareil de mesure d'émission à des intervalles réguliers ou en présence de signaux originaux caractéristiques reconnus par l'appareil de mesure d'émission, tels que des séquences de signaux reconnus pour être critiques pour le système de transmission, ou encore sur entrée manuelle.

9. Dispositif comportant un appareil de mesure d'émission et de réception (1 ou 2) permettant la réalisation d'un procédé de mesure pour l'évaluation de systèmes de transmission numériques (3) selon l'une des revendications 1 à 8, **caractérisé**
**en ce que** l'appareil de mesure d'émission (1) est capable d'enregistrer, côté émission, des séquences du signal original et l'appareil de mesure de réception (2) est capable d'enregistrer, côté réception, des séquences du signal de sortie provenant du canal principal (7 ou 7') dans une mémoire divisée en tranches (5.1 ou 4.2), l'appareil de mesure d'émission comprenant une unité centrale (5) qui, à l'aide d'une unité de commande (5.2.) commande l'enregistrement de ces séquences dans une mémoire divisée en tranches (5.1) et qui, à l'aide d'un convertisseur (5.3), convertit les signaux de commande correspondants et la séquence enregistrée côté émission en une information secondaire apte à être transmise par l'intermédiaire du canal auxiliaire (8, 8'), et l'appareil de mesure de réception (2) comprenant une unité de commande (9) capable de reconnaître des signaux de commande transmis comme information secondaire et qui déclenche en conséquence l'enregistrement d'une séquence provenant du canal principal (7') ou du canal auxiliaire (8') dans la mémoire divisée en tranches (4.2) ou une autre mémoire divisée en tranches (4.1).
